# EUROPÄISCHE PATENTSCHRIFT

(11) **EP 2 986 424 B1**
(45) Veröffentlichungstag und Bekanntmachung des Hinweises auf die Patenterteilung: **15.02.2017**
(21) Anmeldenummer: 14718063.2
(22) Anmeldetag: 16.04.2014
(51) Int. Cl.: B25J 15/04

(54) **GREIFVORRICHTUNG MIT LÖSNAR ANORDENBAREN GREIFFINGERN**
GRIPPING DEVICE WITH EXCHANGEABLE FINGERS
DISPOSITIF DE PRÉHENSION À DOIGTS INTERCHANGEABLES

(30) Priorität: 16.04.2013 DE 102013206792; 20.12.2013 DE 202013011465 U
(43) Veröffentlichungstag der Anmeldung: 24.02.2016
(73) Patentinhaber: Schunk GmbH & Co. KG Spann- und Greiftechnik, 74348 Lauffen an Neckar (DE)
(72) Erfinder: WINKLER, Ralf, 74226 Nordheim (DE); BECKER, Ralf, 71672 Marbach (DE); SCHUSTER, Andreas, 71543 Wuestenrot/Neulautern (DE); FRANZ, Michael, 74360 Ilsfeld (DE); KORTE, René, 74613 Oehringen (DE)
(74) Vertreter: DREISS Patentanwälte PartG mbB
(86) Internationale Anmeldenummer: PCT/EP2014/057688
(87) Internationale Veröffentlichungsnummer: WO 2014/170355

(56) Entgegenhaltungen:
- DD-A1- 226 826
- DE-A1- 3 306 510
- DE-A1- 3 513 893
- DE-A1- 4 111 093
- DE-B- 1 193 655
- DE-B3-102004 029 051
- DE-C1- 19 704 444
- DE-C1- 19 734 832
- DE-U1-202011 052 430
- JP-A- S5 947 189
- JP-A- S60 123 288
- US-A- 5 098 073
- US-A- 5 360 249

## Beschreibung

Die Erfindung betrifft eine Greifvorrichtung mit einem Grundkörper und mit wenigstens einer im Grundkörper entlang einer Verfahrrichtung verfahrbaren Backe, wobei der Grundkörper eine Oberseite aufweist, über die sich ein Befestigungsabschnitt der Backe erhebt. Die Erfindung betrifft insbesondere eine Greifvorrichtung mit einem am Befestigungsabschnitt lösbar anordenbaren Finger und eine Greifvorrichtung, die am Befestigungsabschnitt eine Standardschnittstelle zur Befestigung eines Fingers aufweist.

Derartige Greifvorrichtungen sind beispielsweise aus der DE 197 04 444 C1 bekannt. An aus dem Grundkörper vorragenden Befestigungsabschnitt wird über eine Bohrung, welche insbesondere als Gewindebohrung zum Einschrauben einer Befestigungsschraube ausgebildet sein kann, ein Finger eines unmittelbar gegen das zu greifende Werkstück wirkenden Greiffingers oder in Form eines Aufsatzteils, an welches dann der Greiffinger angeordnet werden kann, angeordnet.

Aus der EP 1 263 554 B1 ist eine Greifvorrichtung bekannt geworden, die ebenfalls in einem Grundkörper verfahrbare Backen aufweist, wobei Standardschnittstellen zum Befestigen von Fingern vorgesehen sind. Diese Backen sehen allerdings keine Befestigungsabschnitte vor, welche sich über das Grundgehäuse beziehungsweise den Grundkörper der Backe erheben.

Aus der DE 10 2004 054 117 B3 sind Greifvorrichtungen bekannt, die ebenfalls in einem Grundkörper entlang einer Verfahrrichtung verfahrbare Backen vorsehen. Diese Backen erheben sich ebenfalls nicht über den Grundkörper. Die Backen sind dabei so ausgebildet, dass an ihnen händisch und werkzeugfrei Aufsatzbacken angeordnet werden können.

Aus der JP S59 47189 A ist eine Greifvorrichtung bekannt, die sich über einen Grundkörper erhebenden Backen aufweist, wobei die Greiffinger jeweils eine Aussparung zur Aufnahme eines Befestigungsabschnitts der entsprechenden Backe hat. Ein Spiel ist zwischen dem Befestigungsabschnitt und den Flächen der Aussparung vorhanden, was eine genaue Anordnung der Greiffinger erschwert.

Der vorliegenden Erfindung liegt dabei die Aufgabe zu Grunde, eingangs genannte Greifvorrichtungen, bei denen die Backen Befestigungsabschnitte aufweisen, die sich über den Grundkörper erheben, derart weiterzubilden, dass die Handhabung flexibler und zudem der Einsatzbereich der Greifvorrichtungen erweitert wird, ohne dass die bestehenden Vorteile der bekannten Greifvorrichtungen beeinträchtigt werden. Insbesondere sollen die Greiffinger am Befestigungsabschnitt einfach und sicher anordenbar sein.

Diese Aufgabe wird durch eine Greifvorrichtung mit den Merkmalen des Anspruchs 1 gelöst.

Erfindungsgemäß weist die Greifvorrichtung einen am Befestigungsabschnitt lösbar anordenbaren Greiffinger auf, wobei der Greiffinger eine Aussparung zur Aufnahme des Befestigungsabschnitts aufweist, die abschnittsweise von mindestens zwei senkrecht zur Verfahrrichtung verlaufenden Flächen begrenzt wird, und wobei eine lösbar am Befestigungsabschnitt oder am Greiffinger anordenbare Klemmschraube vorgesehen ist, wobei der Befestigungsabschnitt bei daran angeordneten Greiffinger von einem freien Ende der Klemmschraube in der Aussparung an der dem freien Ende der Klemmschraube zugewandten Fläche gegen die dem freien Ende abgewandte Fläche verklemmbar und/oder verspannbar ist.

Der Befestigungsabschnitt ist dabei vorzugsweise einstückig, monolithisch mit der Backe ausgebildet.

Eine vorteilhafte Weiterbildung sieht vor, dass die Klemmschraube an dem freien Ende eine Klemmfläche aufweist. Vorzugsweise ist die Klemmfläche als eine senkrecht zur Klemmschraubenlängsachse verlaufende Stirnfläche ausgebildet.

Weiterhin ist es vorteilhaft, wenn die Klemmschraube an dem freien Ende einen Zentrierkonus aufweist. Vorzugsweise bildet der Zentrierkonus dann die Klemmfläche. Der Zentrierkonus der Klemmschraube kann bei Einschrauben der Klemmschraube vorzugsweise in eine Ausnehmung, vorzugsweise in Form einer Sacklochbohrung am Greiffinger eingreifen. Bei der axialen Verlagerung der Klemmschraube kann dann eine Zentrierung der Zentrierkonus in der Sacklochbohrung erfolgen. Der Greiffinger wird dabei nach unten, das heißt in Richtung der Oberseite des Grundkörpers gezogen. Vorzugsweise verläuft der Zentrierkonus in einem Winkel von 0° bis 60° zur Schraubenlängsachse, weiter vorzugsweise in einem Winkel von 45° zur Schraubenlängsachse.

Besonders bevorzugt ist dabei, wenn der Greiffinger auf seiner dem freien Ende der Klemmschraube zugewandten Seite einen Gegenkonus aufweist. Der Zentrierkonus kann dabei beim Einschrauben der Klemmschraube in die Durchgangsbohrung am Befestigungsabschnitt zentrierend in den Gegenkonus einrücken. Im Gegensatz zu einer Sacklochbohrung können dabei die Flächen des Zentrierkonus und des Gegenkonus aneinander gleiten, ohne dass eine Linienberührung erfolgt. Bei der Zentrierung erfolgt wiederum eine Verlagerung des Greiffingers in Richtung der Oberseite des Grundkörper, das heißt nach unten. Es erfolgt ein "Niederzug" des Greiffingers.

Besonders bevorzugt ist dabei, wenn die Klemmschraube in einer Durchgangsbohrung des Befestigungsabschnitts anordenbar ist. Dazu weist die Durchgangsbohrung vorzugsweise ein Innengewinde auf. Die Klemmschraube kann dann mit einem Gewindeabschnitt in das Innengewinde der Durchgangsbohrung des Befestigungsabschnitts eingeschraubt werden. Dabei kann das freie Ende der Klemmschraube gegen die dem freien Ende der Klemmschraube zugewandte Fläche der Aussparung wirken, wobei der Befestigungsabschnitt gegen die dem freien Ende abgewandte Fläche der Aussparung verklemmt oder verspannt werden kann.

Vorteilhafterweise ist der Befestigungsabschnitt bei in die Durchgangsbohrung des Befestigungsabschnitts eingeschraubter Klemmschraube von dem freien Ende der Klemmschraube an der dem freien Ende der Klemmschraube zugewandten Fläche gegen die dem freien Ende abgewandte Fläche verklemmt und/oder verspannt.

Eine andere, ebenfalls besonders bevorzugte Ausgestaltung sieht vor, dass der Befestigungsabschnitt vom freien Ende der Klemmschraube gegen die dem freien Ende der Klemmschraube abgewandte Fläche verklemmbar und/oder verspannbar ist.

Weiterhin ist es vorteilhaft, wenn der Befestigungsabschnitt auf eine senkrecht zur Verfahrrichtung verlaufenden Seite, insbesondere auf seiner der Greifermittelebene abgewandten Seite zwei horizontal verlaufende Nuten aufweist. Die Nuten sind dabei vorzugsweise V-förmig ausgebildet. Bei am Befestigungsabschnitt angeordnetem Greiffinger können dann die wulstartigen Erhebungen des Klemmelements in die Nuten des Befestigungsabschnitts klemmend eingreifen.

Eine weitere vorteilhafte Ausgestaltung sieht vor, dass die Klemmschraube eine Madenschraube ist. Dadurch kann erreicht werden, dass die Klemmschraube im Greiffinger beziehungsweise im Befestigungsabschnitt so angeordnet werden kann, dass der Betrieb der Greifvorrichtung von der Klemmschraube nicht behindert wird, da diese dann nicht nach außen absteht. Eine Betätigung der Klemmschraube, das heißt ein Verlagern von einer Freigabeposition in eine Halteposition kann dabei vorzugsweise mittels eines Inbusschlüssels oder eines Torxschlüssels erfolgen, wobei als Schraubenkopf ein Innensechskant oder ein Torxprofil vorgesehen sein kann.

Weiterhin ist es vorteilhaft, wenn die Klemmschraube eine Rändelschraube ist. Dabei kann insbesondere ein Klemmschraubenkopf mit Rändel vorgesehen sein, welcher nach außen vom Greiffinger absteht. Dies ist vorteilhaft, da dann kein zusätzliches Werkzeug zur Betätigung der Klemmschraube notwendig ist.

Eine vorteilhafte Weiterbildung sieht vor, dass der Befestigungsabschnitt eine Standardschnittstelle zur Befestigung eines Fingers 13 aufweist, wobei der

Befestigungsabschnitt neben der Standardschnittstelle wenigstens eine Schnellwechselschnittstelle zum Befestigen eines Fingers 13 aufweist. Der Befestigungsabschnitt ist dabei vorzugsweise einstückig, monolithisch mit der Backe ausgebildet. Mit der Schnellwechselschnittstelle soll der Finger insbesondere händisch und werkzeugfrei am Befestigungsabschnitt angeordnet werden können. Dadurch wird die Flexibilität der Greifvorrichtung, und insbesondere ein Wechseln des Fingers vereinfacht. Da zum einen die Schnellwechselschnittstelle, zum andern aber auch die Standardschnittstelle vorgesehen ist, können dennoch, wie bisher, Finger auch an der Standardschnittstelle am Befestigungsabschnitt der Backe befestigt werden.

Es hat sich als vorteilhaft herausgestellt, wenn die Schnellwechselschnittstelle eine quer zur Verfahrrichtung verlaufende Aussparung oder Erhebung umfasst. Die Aussparung oder Erhebung kann dabei parallel oder senkrecht zur Oberseite des Grundkörpers verlaufen.

Insbesondere kann die Aussparung beziehungsweise Erhebung als Nut beziehungsweise Steg ausgebildet sein. Die Nut beziehungsweise der Steg kann dabei einen in Längsrichtung verlaufenden konstanten Querschnitt vorsehen.

Um eine Zentrierung und insbesondere ein spielfreies Anordnen des Fingers an der Greifvorrichtung gewährleisten zu können, ist denkbar, dass die Aussparung beziehungsweise Erhebung als Keilaussparung beziehungsweise Keilabschnitt ausgebildet ist.

Die Keilaussparung kann dabei einen Keilgrund aufweisen, der mit einer senkrecht zur Oberseite verlaufenden Linie einen spitzen Winkel einschließt. Der spitze Winkel kann dabei im Bereich von 5° bis 20° und insbesondere im Bereich von 10° bis 15° sein. Der Keilgrund verläuft insbesondere im Bereich der Mittellängsebene der Greifvorrichtung.

Gemäß einer Weiterbildung der Erfindung ist denkbar, dass die Standardschnittstelle innerhalb der Keilaussparung angeordnet ist. Dies hat den Vorteil, dass Bauraum eingespart werden kann, da sich die Standardschnittstelle und die Keilaussparung dann örtlich überschneiden.

Ferner ist denkbar, dass die Aussparung als Nut mit einem Nutgrund derart ausgebildet ist, dass die Nut parallel zur Oberseite des Grundkörpers verläuft. Die Nut als solche kann dabei im Fußbereich des Befestigungsabschnitts angeordnet sein oder auch im mittleren Bereich des Befestigungsabschnitts. Die Nut kann ferner zwischen der Standardschnittstelle und der Oberseite des Grundkörpers vorgesehen sein. Auch dies ergibt eine platzsparende Anordnung.

Der Befestigungsabschnitt als solcher kann eine quaderförmige Grundform vorsehen.

Vorteilhafterweise sieht die Greifvorrichtung zwei aufeinander zu und voneinander weg bewegbare Backen vor, wobei die Backen jeweils auf der einander zugewandten Seite, und/oder jeweils auf der einander abgewandten Seite, die wenigstens eine Schnellwechselschnittstelle aufweisen.

Die Backen können als solche so angeordnet sein, dass sie sich quer zur Verfahrrichtung aneinander abstützen, wobei der an der jeweiligen Backe vorgesehene Befestigungsabschnitt die jeweils andere Backe übergreift und sich die jeweilige Standardschnittstelle und/oder Schnellwechselschnittstelle im Bereich der Mittellängsebene der Vorrichtung vorgesehen ist. Dadurch kann auf vergleichsweise kleinem Bauraum eine Greifvorrichtung bereitgestellt werden, die die eingangs erwähnten Eigenschaften aufweist.

Die Greifvorrichtung kann auch einen an der Schnellwechselschnittstelle des wenigstens einen Befestigungsabschnitts angeordneten Finger umfassen. Eine solche Greifvorrichtung ist jedoch nicht Teil der Erfindung

Der Finger als solches weist dabei Haltemittel auf, die zwischen einer Halteposition und einer Freigabeposition verlagerbar sind, wobei der Finger in der Halteposition an der Backe gehaltert ist und in der Freigabeposition von der Backe lösbar ist.

Die Haltemittel können dabei als um eine Achse auslenkbares Hebelglied ausgebildet sein, dessen freies Ende in der Halteposition mit der Schnellwechselschnittstelle zusammenwirkt.

Die Achse, um die das Hebelglied auslenkbar ist, kann dabei parallel zur Oberseite des Grundkörpers verlaufen, wobei das Hebelglied an seinem anderen freien Ende einen händisch betätigbaren Betätigungsabschnitt aufweist. Durch Betätigen des Betätigungsabschnitts kann folglich das Haltemittel zwischen der Halteposition und der Freigabeposition verlagert werden.

Vorzugsweise sind Vorspannmittel vorgesehen, die das Hebelglied in die Halteposition drängen. Dadurch kann erreicht werden, dass der Finger sicher in der Halteposition verbleibt.

Das Haltemittel kann auch als ein um seine Längsachse verdrehbarer Haltebolzen ausgebildet sein, der einen Halteabschnitt derart aufweist, dass der Halteabschnitt in der Halteposition mit der Schnellwechselschnittstelle zusammenwirkt. Vorzugsweise ist der Halteabschnitt als Exzenterabschnitt ausgebildet, der in der Halteposition gegen die Schnellwechselschnittstelle wirkt.

Weitere Einzelheiten und vorteilhafte Ausgestaltungen der Erfindung sind der nachfolgenden Beschreibung zu entnehmen, anhand derer verschiedene Ausführungsformen der Erfindung näher beschrieben und erläutert sind. Es zeigen:
Figur 1 eine erste Ausführungsform einer erfindungsgemäßen Greifvorrichtung in perspektivischer Ansicht;
Figur 2 einen Schnitt durch die Greifvorrichtung gemäß Figur 1 mit daran angeordneten Greiffingern in einer ersten Ausführungsform;
Figur 3 einen weiteren Schnitt durch eine Greifvorrichtung nach Figur 1 mit daran angeordneten Greiffingern in einer zweiten Ausführungsform;
Figur 4 einen weiteren Schnitt durch eine Greifvorrichtung nach Figur 1 mit daran angeordneten Greiffingern in einer dritten Ausführungsform;
Figur 5 eine Greifvorrichtung in perspektivischer Ansicht, die nicht Teil der Erfindung ist.
Figur 6 einen vergrößerten Ausschnitt der Greifvorrichtung nach Figur 5;
Figur 7 die Greifvorrichtung gemäß Figur 5 mit daran angeordneten Greiffingern;
Figur 8 die Greifvorrichtung gemäß Figur 7 im Schnitt;
Figur 9 ein Klemmelement für eine Greifvorrichtung gemäß Figur 7 und 8;
Figur 10 eine Weiterbildung der erfindungsgemäßen Greifvorrichtung in perspektivischer Ansicht;
Figur 11 einen vergrößerten Ausschnitt der Greifvorrichtung nach Figur 10;
Figur 12 die Greifvorrichtung gemäß Figur 10 mit an den Schnellwechselschnittstellen angeordneten Fingern, die nicht Teil der Erfindung ist;
Figur 13 eine Greifvorrichtung mit an den Schnellwechselschnittstellen angeordneten Fingern, die nicht Teil der Erfindung ist;
Figur 14 einen vergrößerten Ausschnitt aus Figur 13 und
Figur 15 einen Haltebolzen gemäß der Ausführungsform nach Figur 13.

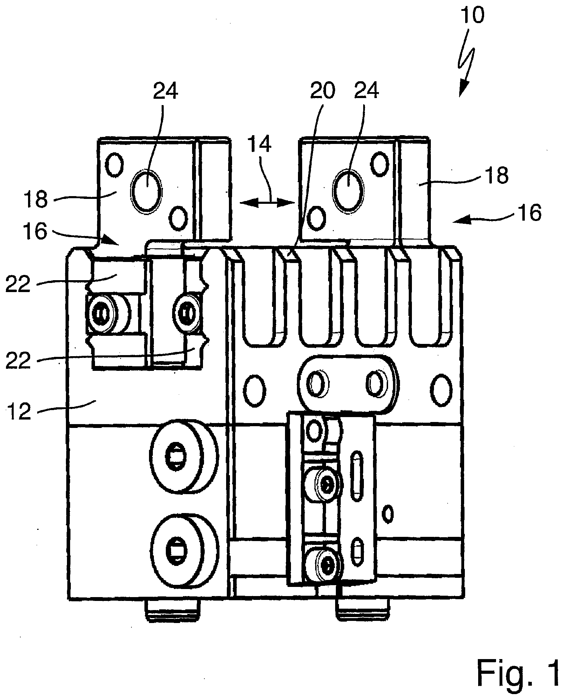

Figur 1 zeigt eine Greifvorrichtung 10 mit einem Grundkörper 12 und mit zwei im Grundkörper 12 entlang eine Verfahrrichtung 14 verfahrbaren Backen 16. Die Backen 16 weisen jeweils einen quaderförmigen Befestigungsabschnitt 18 auf, der einstückig mit der jeweiligen Backe 16 ausgebildet ist. Der Grundkörper 12 sieht eine Oberseite 20 vor, über welche sich die Befestigungsabschnitte 18 erheben. Die Befestigungsabschnitte "ragen" dabei aus dem Grundkörper 12 hervor.

Die Backen 16 weisen einen Grundabschnitt 22 auf, der sich in Verfahrrichtung 14 erstreckt. Die Backengrundabschnitte 22 stützen sich quer zur Verfahrrichtung 14 aneinander ab, wobei der jeweilige Befestigungsabschnitt 18 den jeweiligen Backengrundabschnitt 22 der anderen Backe 16 übergreift. Zur Anordnung von in Figur 1 nicht dargestellten Greiffingern weisen die Befestigungsabschnitte 18 jeweils eine Durchgangsbohrung 24 auf, in welcher ein Innengewinde vorgesehen ist.

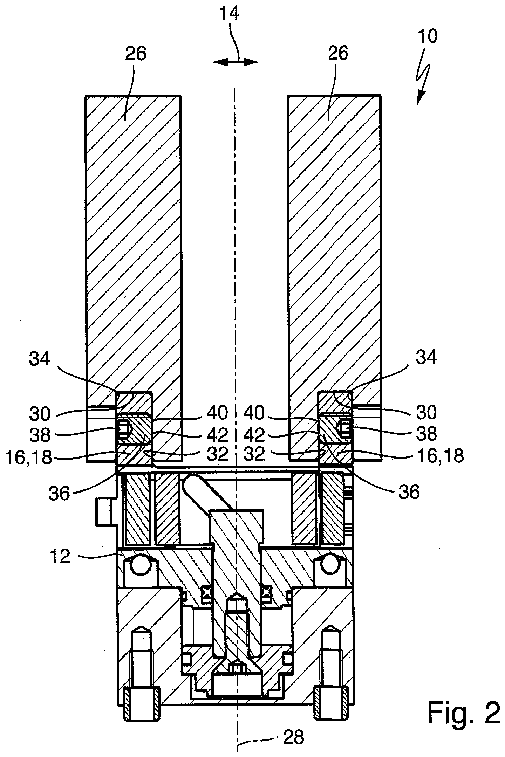

Figur 2 zeigt die Greifvorrichtung 10 gemäß Figur 1 im Schnitt mit an den Befestigungsabschnitten 18 angeordneten Greiffingern 26. Zum Bereitstellen der Greiffunktion sind die Greiferbacken 16 beziehungsweise die Befestigungsabschnitte 18 mit den daran angeordneten Greiffingern 26 entlang der Verfahrrichtung 14 verlagerbar. Insbesondere erfolgt ein Greifen, wenn die Greiferbacken 16 beziehungsweise die Greiffinger 26 in Richtung einer Greifermittelebene 28 verlagert werden. In Figur 2 sind die Greiffinger 26 mit einer Aussparung 30 auf die Befestigungsabschnitte 18 aufgesteckt. Die Aussparungen 30 werden dabei insbesondere von zwei senkrecht zur Verfahrrichtung 14 verlaufenden Flächen 32, 34 begrenzt. Die erste Fläche 32 ist jeweils der Greifermittelebene 28 abgewandt, wobei die zweite Fläche 34 der Greifermittelebene 28 jeweils zugewandt ist. In die Bohrung 24 beziehungsweise in das Gewinde der Bohrung 24 ist eine Klemmschraube 36 in Form einer Madenschraube eingeschraubt. Zur Betätigung, d.h. zum Verlagern der Klemmschraube 36 von einer Freigabeposition in eine Halteposition, weist die Klemmschraube 36 einen Innensechskant 38 auf. Wenn die Greiffinger 26 am Befestigungsabschnitt 18 befestigt sind, ist die Klemmschraube 36 so weit in die Bohrung 24 eingeschraubt, dass jeweils eine Klemmfläche 40 am freien Ende 42 der Klemmschraube 36 gegen die erste Fläche 32 gedrückt wird. Dabei wird der Befestigungsabschnitt 18 in der Aussparung 30 insbesondere verklemmt. Zur Verklemmung liegt dazu einerseits der Befestigungsabschnitt 18 an der zweiten Fläche 34, die dem freien Ende 42 der Klemmschraube 36 abgewandt ist, an und andererseits stützt sich die Klemmfläche 40 der Klemmschraube 36 an der ersten Fläche 32, die dem freien Ende 42 der Klemmschraube 36 zugewandt ist, ab.

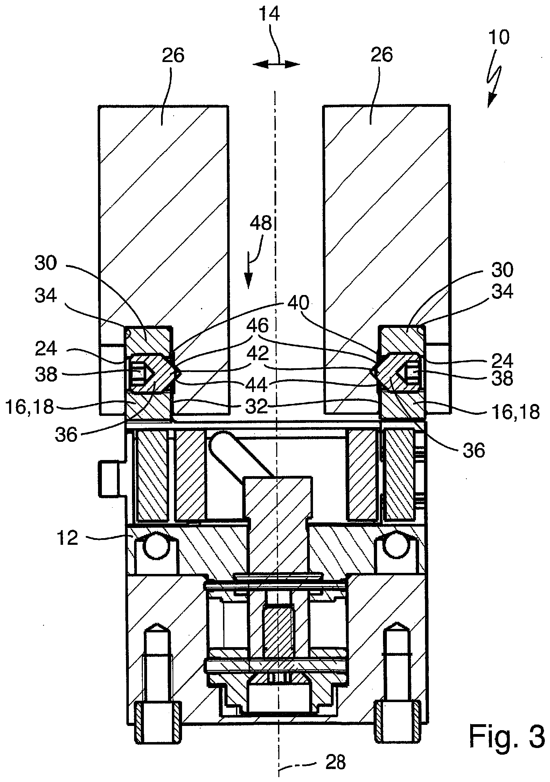

Figur 3 zeigt eine Weiterbildung der Greifvorrichtung 10 gemäß Figur 2. Die sich entsprechenden Bauteile und Elemente sind dabei mit den entsprechenden Bezugszeichen aus Figur 2 versehen. Die Verklemmung des Befestigungsabschnitts 18 in der Aussparung 30 der Greiffinger 26 erfolgt dabei wie in Figur 2 durch eine Klemmschraube 36 in Form einer Madenschraube. Die Klemmschraube 36 weist dabei an ihrem freien Ende 42 einen als Klemmfläche 40 ausgebildeten Zentrierkonus 44 auf. Wenn die Klemmschraube 36 in das Gewinde der Bohrung 24 eingeschraubt wird, gleitet der Zentrierkonus 44 in einen Gegenkonus 46 der Greiffinger 26. Dadurch erfolgt eine Zentrierung des Zentrierkonusses 44 im Gegenkonus 46. Die Greiffinger 26 werden dabei in Richtung des Pfeils 48 in Richtung der Oberseite 20 des Grundkörpers 12 nach unten gezogen. Eine Klemmung des Befestigungsabschnitts 18 in der Aussparung 30 erfolgt dabei, wie in Figur 2 einerseits an der Fläche 34 zwischen dem Greiffinger 26 und dem Befestigungsabschnitt 18 und andererseits an der Klemmfläche 40 des Zentrierkonusses 44 und dem Gegenkonus 46 des Greiffingers 26.

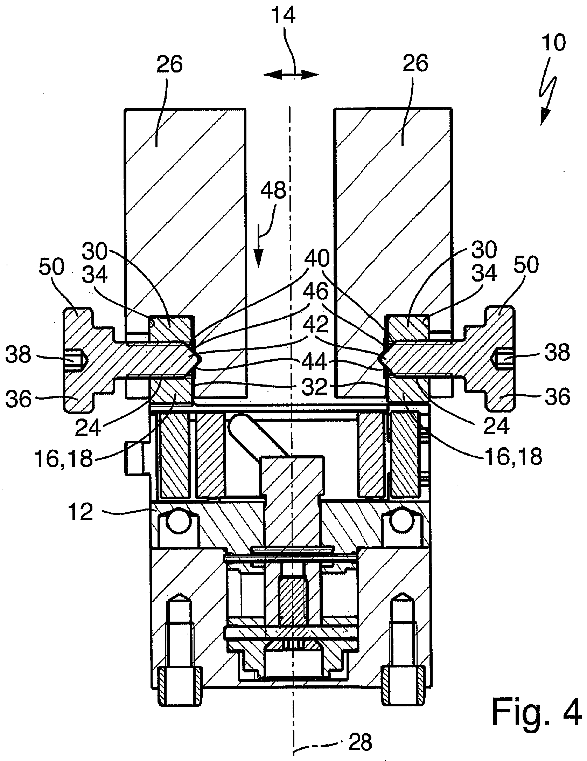

Figur 4 zeigt eine weitere Ausführungsform der Greifvorrichtung 10. Die Greifvorrichtung 10 gemäß Figur 4 unterscheidet sich von der Greifvorrichtung 10 gemäß Figur 3 lediglich darin, dass als Klemmschraube 36 keine Madenschraube sondern eine Rändelschraube vorgesehen ist. Diese Rändelschraube weist zusätzlich zu einem an einem Greifabschnitt 50 der Schraube 36 vorgesehenen Rändel einen Innensechskant 38 auf. Somit ist es möglich, die als Rändelschraube ausgebildete Klemmschraube 36 einerseits mittels des Rändels am Greifabschnitt 50 zu betätigen, wobei andererseits eine Betätigung mittels eines Sechskantschlüssels am Innensechskant 38 ermöglicht wird. Ein Verspannen und/oder Verklemmen des Befestigungsabschnitts 18 in der Aussparung 30 der Greiffinger 26 erfolgt dabei wie bei der Greifvorrichtung 10 gemäß Figur 3.

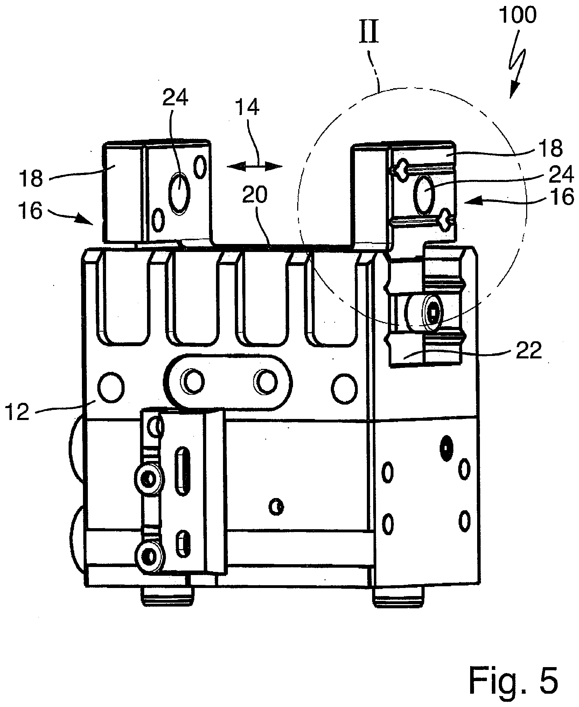

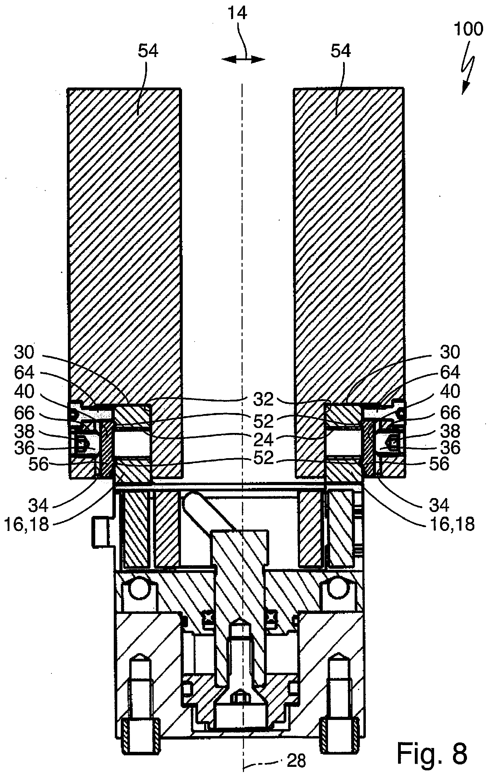

Figur 5 zeigt eine andere Ausführungsform einer Greifvorrichtung 100 in einer Schrägansicht. Diese Ausführungsform ist nicht Teil der Erfindung. Die sich entsprechenden Elemente sind mit den entsprechenden Bezugszeichen aus Figur 1 versehen. Wie deutlich zu erkennen ist, erheben sich die Befestigungsabschnitte 18 über die Oberseite 20 des Grundkörpers 12. Die Befestigungsabschnitte 18 weisen zusätzlich zu der Bohrung 24 auf ihrer Außenseite, das heißt auf ihrer der in Figur 8 gezeigten Greifermittelebene 28 abgewandten Seite zwei horizontal verlaufende, im Querschnitt V-förmige halboffene Nuten 52 auf.

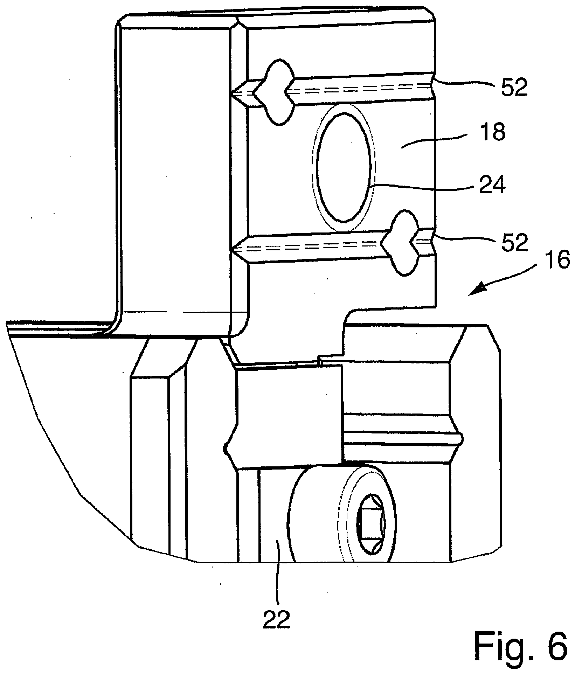

Der Befestigungsabschnitt 18 mit den Nuten 52 ist in der Detailansicht 2 gemäß Figur 5 in Figur 6 vergrößert gezeigt.

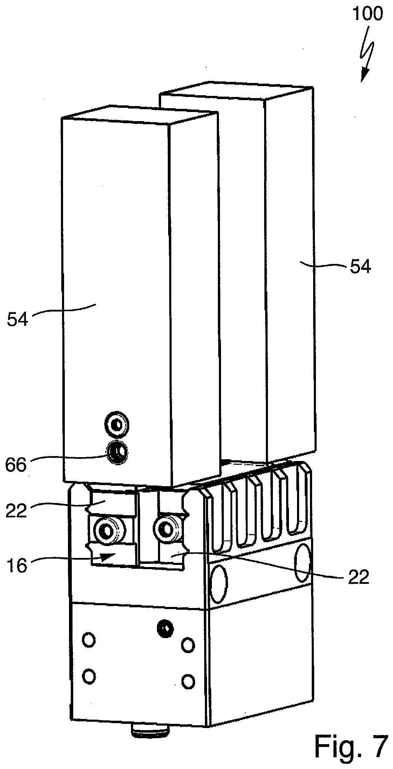

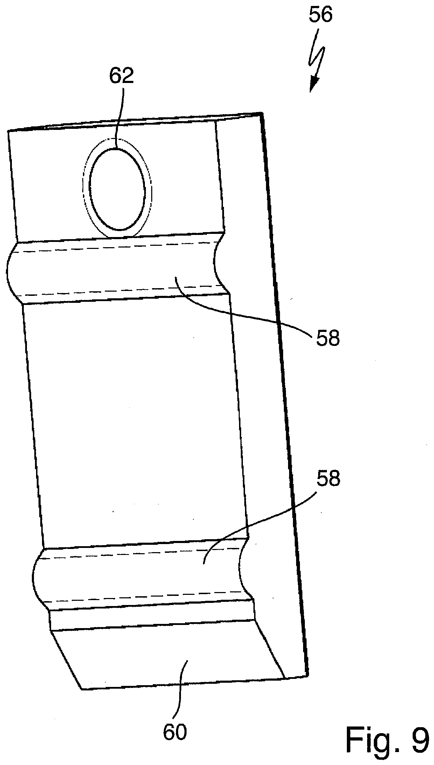

Figur 7 zeigt die Greifvorrichtung 100 gemäß Figur 5 und 6 in einer Schrägdarstellung mit daran angeordneten Greiffingern 54, wobei in Figur 8 ein Schnitt durch die Greifvorrichtung 100 mit daran angeordneten Greiffingern 54 dargestellt ist. Die V-förmigen halboffenen Nuten, welche am Befestigungsabschnitt 18 vorgesehen sind, sind dabei zu erkennen. Ein Verklemmen der Befestigungsabschnitte 18 in einer Aussparung 30 der Greiffinger 54 erfolgt dabei nicht wie in den Figuren 1 bis 4 gezeigt durch das Einsetzen einer Klemmschraube 36 in die Bohrung 24. Vielmehr ist zur Klemmung zwischen einer der Greifermittelebene 28 abgewandten Außenseite des Befestigungsabschnitts 18 und der der Greifermittelebene 28 zugewandten zweiten Fläche 34 der Aussparung 30 ein Klemmelement 56 vorgesehen. Dieses Klemmelement 56 ist in Figur 9 in vergrößerter Darstellung gezeigt. Das Klemmelement 56 ist plattenartig ausgebildet und weist auf seiner dem Befestigungsabschnitt 18 zugewandten Seite zwei horizontal verlaufende wulstartige Erhebungen 58 auf. Ferner weist das Klemmelement 56 eine Einführschräge 60 und auf seiner der Einführschräge 60 abgewandten Seite eine Durchgangsbohrung 62 mit einem Innengewinde auf. Wenn nun wie in Figur 8 gezeigt das Klemmelement 56 zwischen der zweiten Fläche 34 und dem Befestigungsabschnitt 18 angeordnet ist, weisen die wulstartigen Erhebungen 58 in Richtung der V-förmigen Nuten 52 des Befestigungsabschnitts. Das Klemmelement 56 ist insbesondere mittels einer Befestigungsschraube 64 welche von einer Außenseite der Greiffinger 54 betätigbar ist, in der Aussparung 30 lösbar befestigt. Zur Bereitstellung der Klemmwirkung wird das Klemmelement 56 von einer in einer in Figur 7 deutlich erkennbaren Durchgangsbohrung 66 im Greiffinger 54 angeordneten Klemmschraube 36 in Richtung des Befestigungsabschnitts 18 beaufschlagt. Dazu stützt sich die Klemmschraube 36 mit ihrem Gewinde an einem Innengewinde der Durchgangsbohrung 66 im Greiffinger 54 ab. Mit einer Klemmfläche 40 wirkt die Befestigungsschraube 36 dann gegen eine den wulstartigen Erhebungen 58 abgewandte Rückseite des Klemmelements 56. Dabei rücken die wulstartigen Erhebungen 58 in die V-förmigen Nuten 52 ein. Eine Klemmung des Befestigungsabschnitts 18 erfolgt dabei zwischen der ersten, der Greifermittelebene 28 abgewandten bzw. dem freien Ende 42 der Klemmschraube 36 zugewandten Fläche 32 der Aussparung 30 und dem Klemmelement 56, welches von der Klemmfläche 40 der Klemmschraube 36 beaufschlagt wird.

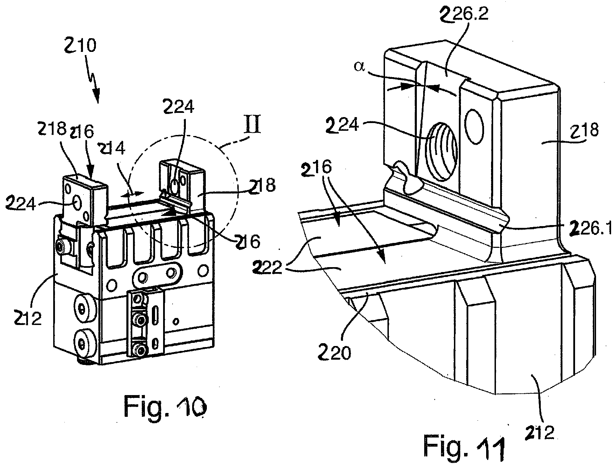

Figur 10 zeigt eine Greifvorrichtung 210 mit einem Grundkörper 212 und mit zwei im Grundkörper 212 entlang einer Verfahrrichtung 214 verfahrbaren Backen 216. Die Backen 216 weisen jeweils einen quaderförmigen Befestigungsabschnitt 218 auf, der einstückig mit der jeweiligen Backe 216 ausgebildet ist. Der Grundkörper 212 sieht eine Oberseite 220 vor, über welche sich die Befestigungsabschnitte 218 erheben. Die Befestigungsabschnitte "ragen" dabei aus dem Grundkörper 212 hervor.

Die Backen 216 weisen einen Grundabschnitt 222 auf, der sich in Verfahrrichtung 214 erstreckt. Die Backengrundabschnitte 222 stützen sich quer zur Verfahrrichtung 214 aneinander ab. Wie insbesondere aus Figur 11 deutlich wird übergreift der jeweilige Befestigungsabschnitt 218 den jeweiligen Backengrundabschnitt 222 der anderen Backe 216.

Wie aus insbesondere Figur 10 und 11 deutlich wird, sieht der jeweilige Befestigungsabschnitt 218 im zentralen Bereich eine Standardschnittstelle 224 zur standardmäßigen Befestigung eines Fingers vor. Die Standardschnittstelle 224 ist dabei als den Backenabschnitt durchgreifende Gewindebohrung ausgebildet, wobei zur Halterung eines Fingers an der Backe 216 eine Befestigungsschraube in die Standardschnittstelle 224 eingeschraubt werden kann. Die Standardschnittstelle 224 kann zudem zur genauen Positionierung eine Passausnehmungen und/oder dazu komplementäre Passstifte umfassen.

Wie ferner aus insbesondere Figur 10 und 11 deutlich wird, sieht der jeweilige Befestigungsabschnitt 218 neben der ihm zugeordneten Standardschnittstelle 224 eine Schnellwechselschnittstelle 226 zum Schnellwechseln beziehungsweise Schnellanordnen eines Fingers vor.

In Figur 11 ist die Schnellwechselschnittstelle 226 ausgebildet als eine parallel zur Oberseite 220 des Grundkörpers 212 verlaufende Quernut 226.1 sowie eine senkrecht zur Oberseite 220 des Grundkörpers 212 verlaufende Längsnut 226.2. Die Quernut 226.1 weist eine über ihre Längserstreckung konstante Querschnittsfläche auf. Die Längsnut 226.2 ist als Keilnut ausgebildet, die mit einer senkrecht zur Oberseite 220 verlaufenden Linie einen Winkel a von ca. 10° einschließt. Wie aus Figur 11 deutlich wird befindet sich die Standardschnittstelle 224 in Form der Gewindebohrung im Nutgrund der Längsnut 226.2.

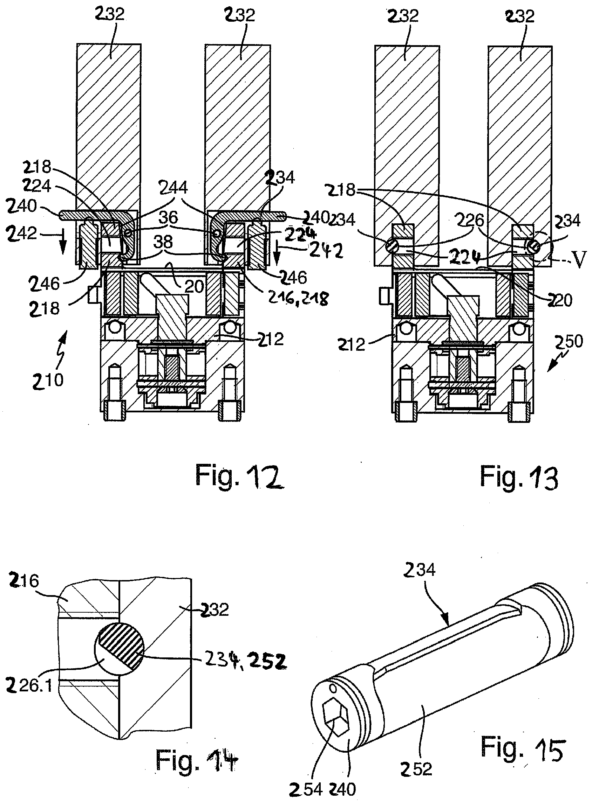

In Figur 12, die die Greifvorrichtung 210 gemäß Figur 10 und 11 im Längsschnitt zeigt, ist an den Backen 216, beziehungsweise an deren Befestigungsabschnitten 218, jeweils ein Finger 232 befestigt. Zwischen den beiden Fingern 232 kann ein handzuhabender Gegenstand gegriffen werden. Eine solche Greifvorrichtung mit an den Schnellwechselschnittstellen angeordneten Fingern ist nicht Teil der Erfindung.

Die Finger 232 sehen ein Haltemittel 234 in Form eines Hebegliedes vor, das zwischen einer Halteposition und einer Freigabeposition verlagerbar ist. Das Haltemittel 234 ist dabei um eine parallel zur Oberseite 220 des Grundkörpers 212 verlaufende Achse 236 auslenkbar. In der in der Figur 12 gezeigten Position befinden sich die Haltemittel 234 in ihrer Halteposition; dadurch sind die Finger 232 an den jeweiligen Backen 216 befestigt.

Die Haltemittel 234 sehen ein erstes freies Ende 238 vor, das in die in Figur 11 deutlich zu erkennende Quernut 226.1 eingreift. Durch händisches Betätigen des zweiten freien Endes 240 des Haltemittels 234 in Richtung des jeweiligen Pfeils 242 kann das Haltemittel 234 aus der Halteposition in die Freigabeposition verlagert werden. Das Haltemittel 234 wird dabei um die jeweilige Achse 236 so weit ausgelenkt, dass das jeweilige freie Ende 238 aus der Quernut 226.1 ausrückt. Die Finger 232 können dann von den Befestigungsabschnitten 218 abgenommen werden.

Wie aus Figur 12 ferner deutlich wird, weisen die Haltemittel 234 einen Keilabschnitt 244 auf, der in der Halteposition mit der jeweiligen keilartigen Längsnut 226.2 zusammenwirkt. Dadurch wird erreicht, dass beim Aufsetzen der Finger 232 auf die jeweilige Backe 216 eine Zentrierung der Finger 232, und damit ein spielfreies und positionsgenaues Anordnen der Finger 232 an der jeweiligen Backe 216 gewährleistet werden kann.

Die Finger 232 sehen ferner, wie ebenfalls aus Figur 12 deutlich wird, Vorspannmittel 246 vor, die die Haltemittel 234 in ihre Halteposition drängen. Die Vorspannmittel 246 können dabei beispielsweise als federbeaufschlagte, gegen das jeweilige Haltemittel 234 wirkende Bolzenstifte ausgebildet sein.

Anstelle der Finger 232 ist es denkbar, an den Backen 216, über deren Standardschnittstellen 224, Finger mittels Befestigungsschrauben, wie es vorbekannt ist, zu halten.

Die in Figur 13 dargestellte Greifvorrichtung 250 entspricht im Wesentlichen der Greifvorrichtung 210 gemäß Figur 10 bis 12. Eine solche Greifvorrichtung mit an den Schnellwechselschnittstellen angeordneten Fingern ist nicht Teil der Erfindung. Die Befestigungsabschnitte 218 sehen dabei, entsprechend der Greifvorrichtung 210, in ihrem zentralen mittleren Bereich eine Standardschnittstelle 224 in Form einer Gewindebohrung vor.

Figur 14 zeigt den vergrößerten Ausschnitt V aus Figur 13. Deutlich zu erkennen ist, dass der Befestigungsabschnitt 218 im Bereich der Standardschnittstelle 224 eine parallel zur Oberseite 220 verlaufende Quernut 226.1 aufweist, die die Schnellwechselschnittstelle 226 bildet. Am Finger 232 ist in Figur 13 das Haltemittel 234 als ein um seine Längsachse verdrehbarer Haltebolzen ausgebildet, der in Figur 15 als Einzelteil dargestellt ist. Der Haltebolzen sieht dabei einen Halteabschnitt 252 vor, der als Exzenterabschnitt ausgebildet ist. Beim Verdrehen des Haltemittels 234 um seine Längsachse greift der Halteabschnitt 252 in die Quernut 226 ein und verkeilt sich in der Halteposition an deren Oberfläche. Wie aus Figur 15 deutlich wird weist das Haltemittel 234 an seinem freien Ende eine Schlüsselaussparung 254 auf, in welche ein geeigneter Schlüssel, hier ein Sechskantschlüssel, zum Verdrehen des Haltemittels 234 eingreifen kann. Ferner ist denkbar, dass am Haltemittel 234 ein händisch betätigbarer Hebel vorgesehen ist.

Ein Schnellwechseln der Finger 232 kann folglich durch Verdrehen des Haltemittels 234 um seine Längsachse auf einfache Art und Weise bereitgestellt werden.

## Patentansprüche

1. Greifvorrichtung (10, 100, 210, 250) mit einem Grundkörper (12, 212), mit wenigstens einer im Grundkörper (12, 212) entlang einer Verfahrrichtung (14, 214) verfahrbaren Backe (16, 216), wobei der Grundkörper (12, 212) eine Oberseite (20, 220) aufweist, über die sich ein Befestigungsabschnitt (18, 218) der Backe (16, 216) erhebt, wobei die Greifvorrichtung einen am Befestigungsabschnitt (18) lösbar anordenbaren Greiffinger (26, 54) aufweist, und wobei der Greiffinger (26, 54) eine Aussparung (30) zur Aufnahme des Befestigungsabschnitts (18) aufweist, die abschnittsweise von mindestens zwei senkrecht zur Verfahrrichtung (14) verlaufenden Flächen (32, 34) begrenzt wird, **dadurch gekennzeichnet, dass** eine lösbar am Befestigungsabschnitt (18) anordenbare Klemmschraube (36) vorgesehen ist, wobei der Befestigungsabschnitt (18) bei daran angeordnetem Greiffinger (26, 54) von einem freien Ende(42) der Klemmschraube (36) in der Aussparung (30) an der dem freien Ende (42) der Klemmschraube (36) zugewandten Fläche (32) gegen die dem freien Ende (42) abgewandte Fläche (34) verklemmbar und/oder verspannbar ist.

2. Greifvorrichtung (10, 100) nach Anspruch 1, **dadurch gekennzeichnet, dass** die Klemmschraube (36) an dem freien Ende (42) eine Klemmfläche (40) aufweist.

3. Greifvorrichtung (10, 100) nach Anspruch 1 oder 2, **dadurch gekennzeichnet, dass** die Klemmschraube (36) an dem freien Ende (42) einen Zentrierkonus (44) aufweist.

4. Greifvorrichtung (10, 100) nach einem der Ansprüche 1 bis 3, **dadurch gekennzeichnet, dass** der Greiffinger (26) auf seiner dem freien Ende (42) der Klemmschraube (36) zugewandten Seite einen Gegenkonus (46) aufweist.

5. Greifvorrichtung (10) nach einem der Ansprüche 1 bis 4, **dadurch gekennzeichnet, dass** die Klemmschraube (36) in einer Durchgangsbohrung (24) des Befestigungsabschnitts (18) anordenbar ist.

6. Greifvorrichtung (10) nach Anspruch 5, **dadurch gekennzeichnet, dass** der Befestigungsabschnitt (18) bei in die Durchgangsbohrung (24) des Befestigungsabschnitts (18) eingeschraubter Klemmschraube (36) von dem freien Ende (42) der Klemmschraube (36) an der dem freien Ende (42) der Klemmschraube (36) zugewandten Fläche (32) gegen die dem freien Ende (42) abgewandte Fläche (34) verklemmt und/oder verspannt ist.

7. Greifvorrichtung (100) nach einem der Ansprüche 1 bis 4, **dadurch gekennzeichnet, dass** der Befestigungsabschnitt (18) vom freien Ende (42) der Klemmschraube (36) gegen die dem freien Ende (42) der Klemmschraube (36) abgewandte Fläche (34) verklemmbar und/oder verspannbar ist.

8. Greifvorrichtung (100)nach einem der Ansprüche 1 bis 7, **dadurch gekennzeichnet, dass** der Befestigungsabschnitt (18) auf einer senkrecht zur Verfahrrichtung (14) verlaufenden Seite zwei horizontal verlaufende Nuten (52) aufweist.

9. Greifvorrichtung (10, 100) nach einem der Ansprüche 1 bis 8, **dadurch gekennzeichnet, dass** die Klemmschraube (36) eine Madenschraube oder eine Rändelschraube ist.

10. Greifvorrichtung (210, 250) nach Anspruch 1, **dadurch gekennzeichnet, dass** der Befestigungsabschnitt (218) eine Standardschnittstelle (224) zur Befestigung eines Fingers (232) aufweist und dass der Befestigungsabschnitt (218) neben der Standardschnittstelle (224) wenigstens eine Schnellwechselschnittstelle (226) zum Befestigen eines Fingers (232) aufweist.

11. Greifvorrichtung (210, 250) nach Anspruch 10, **dadurch gekennzeichnet, dass** die Schnellwechselschnittstelle (226) eine quer zur Verfahrrichtung verlaufende Aussparung (226.1, 226.2) oder Erhebung umfasst, wobei die Aussparung (226.1, 226.2) oder Erhebung parallel oder senkrecht zur Oberseite des Grundkörper verläuft, und wobei die Aussparung (226.1, 226.2) oder Erhebung als Nut bzw. Steg ausgebildet ist.

12. Greifvorrichtung (210, 250) nach Anspruch 11, **dadurch gekennzeichnet, dass** die Aussparung (226.2) als Keilaussparung ausgebildet ist, wobei die Aussparung (226.2) als Keilaussparung mit einem Keilgrund derart ausgebildet ist, dass der Keilgrund mit einer senkrecht zur Oberseite (220) verlaufen Linie einen spitzen Winkel einschließt, bzw. dass die Erhebung als Keilabschnitt ausgebildet ist.

13. Greifvorrichtung (210, 250) nach einem der Ansprüche 11 bis 12, **dadurch gekennzeichnet, dass** die Standardschnittstelle (224) innerhalb der Aussparung (226.2) angeordnet ist.

14. Greifvorrichtung (210, 250) nach einem der Ansprüche 11 bis 13 , **dadurch gekennzeichnet, dass** die Aussparung (226.1) als Nut mit einem Nutgrund derart ausgebildet ist, dass die Nut parallel zur Oberseite des Grundkörpers verläuft.

15. Greifvorrichtung (210, 250) nach einem der Ansprüche 10 bis 14, **dadurch gekennzeichnet, dass** zwei aufeinander zu und voneinander weg bewegbare Backen (216) vorgesehen sind, wobei die Backen (216) jeweils auf der einander zugewandten Seite und/oder jeweils auf der einander abgewandten Seite wenigstens die wenigstens eine Schnellwechselschnittstelle (226) aufweisen.

## Claims

1. A gripper device (10, 100, 210, 250) having a base body (12, 212) with at least one jaw (16, 216) movable in the base body (12, 212) along a travel direction (14, 214), in which the base body (12, 212) has a top side (20, 220) above which a fastening portion (18, 218) of the jaw (16, 216) rises, and the gripper device has a gripper finger (26, 54) which can be located detachably on the fastening portion (18), and the gripper finger (26, 54) has a recess (30) for receiving the fastening portion (18), which recess is bounded in some portions by at least two faces (32, 34) extending perpendicular to the travel direction (14), **characterized in that** a clamping screw (36) that can be located detachably on the fastening portion (18) is provided, and the fastening portion (18), when the gripper finger (26, 54) is located on it, can be clamped and/or braced in the recess (30) on the face (32) facing toward the free end (42) of the clamping screw (36) against the face (34) facing away from the free end (42) by a free end (42) of the clamping screw (36).

2. The gripper device (10, 100) of claim 1, **characterized in that** the clamping screw (36) has a clamping face (40) on the free end (42).

3. The gripper device (10, 100) of claim 1 or 2, **characterized in that** the clamping screw (36) has a centering cone (44) on the free end (42).

4. The gripper device (10, 100) of one of claims 1 through 3, **characterized in that** the gripper finger (26) has a counter cone (46) on its side facing toward the free end (42) of the clamping screw (36).

5. The gripper device (10) of one of claims 1 through 4, **characterized in that** the clamping screw (36) can be located in a through bore (24) of the fastening portion (18).

6. The gripper device (10) of claim 5, **characterized in that** the fastening portion (18), when the clamping screw (36) has been screwed into the through bore (24) of the fastening portion (18), is clamped and/or braced, on the face (32) facing toward the free end (42) of the clamping screw (36), against the face (34) facing away from the free end (42) by the free end (42) of the clamping screw (36).

7. The gripper device (100) of one of claims 1 through 4, **characterized in that** the fastening portion (18) can be clamped and/or braced by the free end (42) of the clamping screw (36) against the face (34) facing away from the free end (42) of the clamping screw (36).

8. The gripper device (100) of one of claims 1 through 7, **characterized in that** the fastening portion (18), on a side extending perpendicular to the travel direction (14), has two horizontally extending grooves (52).

9. The gripper device (10, 100) of one of claims 1 through 8, **characterized in that** the clamping screw (36) is a grub screw or knurled screw.

10. The gripper device (210, 250) of claim 1, **characterized in that** the fastening portion (218) has a standard interface (224) for securing a finger (232); and that the fastening portion (218), besides the standard interface (224), has at least one quick-change interface (226) for securing a finger (232).

11. The gripper device (210, 250) of claim 10, **characterized in that** the quick-change interface (226) includes a recess (226.1, 226.2) or protuberance extending transversely to the travel direction, and the recess (226.1, 226.2) or protuberance extends parallel or perpendicular to the top side of the base body, and the recess (226.1, 226.2) or protuberance is embodied as a groove or a land.

12. The gripper device (210, 250) of claim 11, **characterized in that** the recess (226.2) is embodied as a wedge-shaped recess, and the recess (226.2) is embodied as a wedge-shaped recess with a wedge base in such a way that the wedge base, with a line extending perpendicular to the top side (220), forms an acute angle, or the protuberance is embodied as a wedge section.

13. The gripper device (210, 250) of one of claims 11 through 12, **characterized in that** the standard interface (224) is located inside the recess (226.2).

14. The gripper device (210, 250) of one of claims 11 through 13, **characterized in that** the recess (226.1) is embodied as a groove with a groove base in such a way that the groove extends parallel to the top side of the base body.

15. The gripper device (210, 250) of one of claims 10 through 14, **characterized in that** two jaws (216) movable toward and away from one another are provided, and the jaws (216) each, on the side facing toward one another and/or on the side facing away from one another, have at least the at least one quick-change interface (226).

## Revendications

1. Dispositif de préhension (10, 100, 210, 250) comprenant un corps de base (12, 212) et au moins une mâchoire (16, 216) qui peut être déplacée dans le corps de base (12, 212) le long d'un sens de déplacement (14, 214), le corps de base (12, 212) présentant un côté supérieur (20, 220), au-dessus duquel s'élève un segment de fixation (18, 218) de la mâchoire (16, 216), le dispositif de préhension présentant un doigt de préhension (26, 54) pouvant être agencé de façon amovible au niveau du segment de fixation (18), et le doigt de préhension (26, 54) présentant un renfoncement (30) pour recevoir le segment de fixation (18), lequel renfoncement étant délimité par endroit par au moins deux surfaces (32, 34) s'étendant perpendiculairement au sens de déplacement (14), **caractérisé en ce qu'**il est prévu une vis de serrage (36) pouvant être agencée de façon amovible sur le segment de fixation (18), le segment de fixation (18) pouvant être bloqué et/ou serré sur le doigt de préhension (26, 54) prévu sur ce dernier par une extrémité libre (42) de la vis de serrage (36) dans le renfoncement (30) sur la surface orientée vers l'extrémité libre (42) de la vis de serrage (36) contre la surface (34) orientée à l'opposé de l'extrémité libre (42).

2. Dispositif de préhension (10, 100) selon la revendication 1, **caractérisé en ce que** la vis de serrage (36) présente au niveau de l'extrémité libre (42) une surface de serrage (40).

3. Dispositif de préhension (10, 100) selon la revendication 1 ou 2, **caractérisé en ce que** la vis de serrage (36) présente au niveau de l'extrémité libre (42) un cône de centrage (44).

4. Dispositif de préhension (10, 100) selon l'une des revendications 1 à 3, **caractérisé en ce que** le doigt de préhension (26) présente sur son côté orienté vers l'extrémité libre (42) de la vis de serrage (36) un contre-cône (46).

5. Dispositif de préhension (10) selon l'une des revendications 1 à 4, **caractérisé en ce que** la vis de serrage (36) peut être agencée dans un alésage traversant (24) du segment de fixation (18).

6. Dispositif de préhension (10) selon la revendication 5, **caractérisé en ce que** le segment de fixation (18) est bloqué et/ou serré avec la vis de serrage (36) vissée dans l'alésage traversant (24) du segment de fixation (18) par l'extrémité libre (42) de la vis de serrage (36) sur la surface orientée vers l'extrémité libre (42) de la vis de serrage (36) contre la surface (34) orientée à l'opposé de l'extrémité libre (42).

7. Dispositif de préhension (100) selon l'une des revendications 1 à 4, **caractérisé en ce que** le segment de fixation (18) peut être bloqué et/ou serré par l'extrémité libre (42) de la vis de serrage (36) contre la surface (34) orientée à l'opposé de l'extrémité libre (42) de la vis de serrage (36).

8. Dispositif de préhension (100) selon l'une des revendications 1 à 7, **caractérisé en ce que** le segment de fixation (18) présente sur un côté s'étendant perpendiculairement au sens de déplacement (14) deux rainures (52) s'étendant horizontalement.

9. Dispositif de préhension (10, 100) selon l'une des revendications 1 à 8, **caractérisé en ce que** la vis de serrage (36) est une vis sans tête ou une vis moletée.

10. Dispositif de préhension (210, 250) selon la revendication 1, **caractérisé en ce que** le segment de fixation (218) présente une interface standard (224) pour la fixation d'un doigt (232), et **en ce que** le segment de fixation (218) présente en plus de l'interface standard (224) au moins une interface de changement rapide (226) pour fixer un doigt (232).

11. Dispositif de préhension (210, 250) selon la revendication 10, **caractérisé en ce que** l'interface de changement rapide (226) comprend un renfoncement (226.1, 226.2) ou une saillie s'étendant transversalement au sens de déplacement, le renfoncement (226.1, 226.2) ou la saillie s'étendant parallèlement ou perpendiculairement au côté supérieur du corps de base, et le renfoncement (226.1, 226.2) ou la saillie étant réalisé(e) sous la forme d'une rainure ou d'une traverse.

12. Dispositif de préhension (210, 250) selon la revendication 11, **caractérisé en ce que** le renfoncement (226.2) est réalisé sous la forme d'un renfoncement à clavette, le renfoncement (226.2) étant réalisé sous la forme d'une clavette avec une base de clavette réalisée de telle sorte que la base de clavette avec une ligne s'étendant perpendiculairement au côté supérieur (220) forme un angle aigu, et **en ce que** la saillie est réalisée sous la forme d'une partie de clavette.

13. Dispositif de préhension (210, 250) selon l'une des revendications 11 à 12, **caractérisé en ce que** l'interface de changement rapide (224) est agencée dans le renfoncement (226.2).

14. Dispositif de préhension (210, 250) selon l'une des revendications 11 à 13, **caractérisé en ce que** le renfoncement (226.1) est réalisé sous la forme d'une rainure avec une base de rainure réalisée de telle sorte que la rainure s'étend parallèlement au côté supérieur du corps de base.

15. Dispositif de préhension (210, 250) selon l'une des revendications 10 à 14, **caractérisé en ce qu'**il est prévu deux mâchoires (216) pouvant être rapprochées l'une vers l'autre ou écartées l'une de l'autre, les mâchoires (216) présentant chacune sur le côté orienté l'une vers l'autre et/ou sur le côté orienté à l'opposé l'une de l'autre ladite au moins une interface de changement rapide (226).
